# EUROPÄISCHE PATENTSCHRIFT

(11) **EP 1 493 635 B1**
(45) Veröffentlichungstag und Bekanntmachung des Hinweises auf die Patenterteilung: **19.04.2006**
(21) Anmeldenummer: 04013017.1
(22) Anmeldetag: 02.06.2004
(51) Int. Cl.: B60R 21/13

(54) **Überrollbügel-System für ein Cabriolet**
Rollover bar for cabriolet
Arceau de sécurité pour cabiolet

(30) Priorität: 04.07.2003 DE 10330311
(43) Veröffentlichungstag der Anmeldung: 05.01.2005
(73) Patentinhaber: ISE Innomotive Systems Europe GmbH, 51702 Bergneustadt (DE)
(72) Erfinder: Müller, Hartwig Dr. Ing.-, 09126 Chemnitz (DE); Reich, Marcus, 08393 Meerane (DE)
(74) Vertreter: Grünecker, Kinkeldey, Stockmair & Schwanhäusser Anwaltssozietät

(56) Entgegenhaltungen:
- EP-A- 1 029 746
- DE-B- 10 329 903
- DE-C- 4 425 954
- DE-C- 19 644 877
- DE-U- 9 200 457

## Beschreibung

Die Erfindung betrifft ein Überrollbügel-System für ein Cabriolet gemäß dem Oberbegriff des Anspruchs 1. Ein Überrollbügel-System nach dem Oberbegriff des Anspruchs 1 ist aus DE 9 200 457 U bekannt.

Der Überrollbügel dient zum Insassenschutz im Falle eines Überschlags des Cabriolets. Um eine optimale Schutzwirkung zu erzielen, muss der Überrollbügel bei geöffnetem Verdeck im Crash-Fall weiter ausgefahren sein als es der bei geschlossenem Verdeck zu Verfügung stehende Innenraum zulässt. Da nicht vollständig auszuschließen ist, dass beim Schleudern des Fahrzeugs, bei einer anderen Unfallkondition oder aufgrund eines Computerfehlers der Ausfahrantrieb des Überrollbügels aktiviert wird und diesen ausfährt (Fehlauslösung), würde bei geschlossenem Verdeck das Verdeck beschädigt, selbst wenn es zu keinem Überschlag kommt. Aus diesem Grund sollte der ausfahrende Überrollbügel das geschlossene Verdeck nicht beschädigen, und dennoch bei einem Überschlag mit geschlossenem Verdeck dann in Zusammenwirkung mit dem eine gewisse Festigkeit aufweisenden Verdeck eine Insassen-Schutzfunktion erfüllen.

Der Erfindung liegt die Aufgabe zugrunde, ein Überrollbügel-System anzugeben, das bei einem Überschlag unabhängig davon eine Schutzfunktion für die Insassen leistet, ob das Verdeck zuvor geöffnet oder noch geschlossen war, und dessen Überrollbügel das geschlossene Verdeck nicht beschädigt.

Diese Aufgabe wird mit den Merkmalen des Anspruchs 1 gelöst.

Bei geöffnetem Verdeck wird der Überrollbügel, wie üblich, auf die maximale Ausfahrhöhe ausgefahren und verriegelt, um die Insassen optimal zu schützen. Kommt es z.B. bei geschlossenem Verdeck, zum Auslösen des Ausfahrantriebs, dann fährt der Überrollbügel nur über die reduzierte Ausfahrhöhe aus, weil die zweite Anschlaganordnung zur Wirkung kommt und den Überrollbügel abfängt, bevor die erste Anschlaganordnung zur Wirkung kommen kann. Dadurch wird das Verdeck nicht beschädigt und dennoch eine Sicherheitsfunktion für die Insassen erzielt, falls es zu einem Überschlag komme, und kann der Überrollbügel später wieder zurückgestellt werden.

Zweckmäßig stellt die geschlossene Kondition des Verdecks die steuerungstechnischen Voraussetzung dafür dar, dass die zweite Anschlaganordnung beim Ausfahren des Überrollbügels wirksam wird.

Hierfür wird zweckmäßig ein femsteuerbarer Stellaktuator benutzt, der für den Fanganschlag oder/und den Gegenfanganschlag eine Stellbewegung z.B. quer zur Ausfahrrichtung des Überrollbügels bewirkt.

Zweckmäßig wird der Gegenfanganschlag direkt am Überrollbügel, beispielsweise als Schulter ausgebildet, und der Fanganschlag mit dem Stellaktuator an der Abstützführung angeordnet.

Altemativ kann der Gegenfanganschlag mit dem Stellaktuator direkt am Überrollbügel, vorzugsweise an einer Flachseite des Überrollbügels, montiert sein, während der Fananschlag stationär an der Abstützführung oder einem Führungsprofil der Abstützführung ausgebildet ist.

Baulich einfach und funktionssicher wird mit dem Stellaktuator ein quer zur Ausfahrrichtung linear verschiebbarer Anschlagbolzen oder eine verschwenkbare Anschlagklinke, jeweils in einem zur Kraftaufnahme dienenden Stützlager, betätigt, jedoch nur dann, wenn das Verdeck geschlossen ist.

Bei einer zweckmäßigen Ausführungsform ist der Gegenfanganschlag der zweiten Anschlaganordnung eine an der Außenseite des Randbereiches des Überrollbügels angeformte Schulter mit einem anschließenden Selbsthemmbereich, vorzugsweise aus dem Material des Überrollbügels. Über den Eingriff zwischen dem Gegenfanganschlag und dem Fanganschlag und mit dem Selbsthemmbereich wird die Ausfahrbewegung des Überrollbügels sanfter bis zum vollständigen Stillstand abgebremst.

Montagetechnisch einfach bildet der Anschlagbolzen mit dem Stützlager und dem Stellaktuator eine Baueinheit, die sich bequem an der Stützführung oder einem Führungsprofil der Stützführung anbauen lässt, und die vorfertigbar und vorprüfbar ist.

Bei einer zweckmäßigen Ausführungsform bildet ferner das als Montierblock ausgebildete Stützlager gleichzeitig den Anschlag der ersten Anschlaganordnung, so dass das Stützlager eine Doppelfunktion erfüllt, nämlich die Abstützung des Anschlagbolzens im Falle der reduzierten Ausfahrhöhe und die Abstützung des Überrollbügels bei der maximalen Ausfahrhöhe.

Bei einer weiteren, zweckmäßigen Ausführungsform bildet der Fanganschlag der zweiten Anschlaganordnung gleichzeitig den Gegenanschlag der ersten Anschlaganordnung, wobei, vorzugsweise, der Fanganschlag in einem in der Stützführung montierten Führungsprofil für den Überrollbügel-Randbereich angeordnet ist. So erfüllt der Fanganschlag eine Doppelfunktion für beiden Ausfahrhöhen.

Montagetechnisch günstig ist es ferner, wenn der Anschlagbolzen mit dem Stellaktuator eine erste Baueinheit bildet, während das Stützlager am Überrollbügel angeordnet wird, vorzugsweise in diesen integriert ist.

Bei einer alternativen Ausführungsform weist der als Sperrklinke ausgebildete Fanganschlag einen Winkelhebel auf, dessen einer Arm sich über die Schulter und dem gegebenenfalls vorgesehenen Selbsthemmbereich verzahnt, um die reduzierte Ausfahrhöhe zu definieren, während der andere Arm mit dem Stellaktuator kooperiert, um den einen Arm in die Fangposition zu verstellen. Es lässt sich ein einfacher, unidirektionaler Stellaktuator verwenden, wenn der Winkelhebel durch eine Feder in die Bereitschaftsposition beaufschlagt und solange in dieser gehalten wird, bis der Stellaktuator eingreift.

Funktionssicher ist ein Stellaktuator mit einem Elektromotor wie einem Magneten oder dgl.

Um bei einem Crash das Überrollbügel-System zu informieren, wie weit der Überrollbügel auszufahren ist, wird der Stellaktuator zweckmäßig mit einer Auslösesteuerung und/oder einem Sensor für die Verdeckkondition des Cabriolets in elektrische Wirkverbindung gebracht. Ist das Verdeck geschlossen, dann ist oder wird in einer das System auslösenden Unfallsituation der Stellaktuator betätigt. Ist das Verdeck hingegen geöffnet, dann wird der Stellaktuator keinesfalls betätigt.

Da die erste oder die zweite Anschlaganordnung nur für die Definition der maximalen oder bzw. der reduzierten Ausfahrhöhe verantwortlich ist, und bei einem Überschlag auftretende Belastungen in den Fahrzeugkörper eingeleitet werden müssen, benötigt der Überrollbügel eine in Einschieberichtung bei jeder Ausfahrhöhe wirksame Verriegelung. Zweckmäßig ist deshalb wenigstens eine Widerlagerreihe vorgesehen, mit deren Widerlagern wenigstens ein Sperrglied in Eingriff ist, um mit einem Eingriff eine Rückbewegung des Überrollbügels zu unterbinden. Zweckmäßig ist eine Zahnreihe am Überrollbügel angeformt, in die eine federbelastete Rastklinke an der Stützführung oder in dem Stützprofil der Stützführung eingreift, und die bei der Ausfahrbewegung über die Zähne springt und die Ausfahrbewegung zulässt. Damit bei der maximalen und der reduzierten Ausfahrhöhe jeweils eine stabile Abstützung gegeben ist, sind die Relativpositionen des Sperrgliedes und der Widerlager in der Reihe so aufeinander abgestimmt, dass jeweils kurz vor oder bei Erreichen der respektiven Ausfahrhöhe ein voller, die Rückbewegung des Überrollbügels sperrender Eingriff vorhanden ist. Natürlich können auch mehrere Widerlagerreihen mit mehreren Sperrgliedern kooperieren, um eine möglichst hohe Auflösung und/oder eine beidseitige Abstützung des Überrollbügels zu erzeugen. Im übrigen können auch die ersten und zweiten Anschlaganordnungen doppelt vorgesehen sein.

Bei einer besonders zweckmäßigen Ausführungsform ist schließlich der Überrollbügel ein Pressformteil aus Faserverbundkunststoff-Pregpregs mit in eine Kunststoffmatrix, wie beispielsweise Polypropylen, eingebetteten hochfesten Fasem, wie beispielsweise Glasfasem. Der Pressformteil besteht zweckmäßig aus zwei miteinander verbundenen Schalen, die belastungsorientiert gestaltet sind, wobei sich viele Komponenten der ersten und zweiten Anschlagvorrichtungen formtechnisch gleich in den Pressformteil integrieren lassen.

Anhand der Zeichnung werden Ausführungsformen des Erfindungsgegenstandes erläutert. Es zeigen:
- Fig. 1: eine Ansicht eines Überrollbügel-Systems eines Cabriolets in Cabriolet-Längsrichtung,
- Fig. 2: eine um 90° nach unten geklappte Ansicht zu Fig. 1,
- Fig. 3: eine Ansicht ähnlich der von Fig. 1 einer weiteren Ausführungsform eines Überrollbügel-Systems, und
- Fig. 4: eine Teilschnittansicht eines Details einer weiteren Ausführungsform.

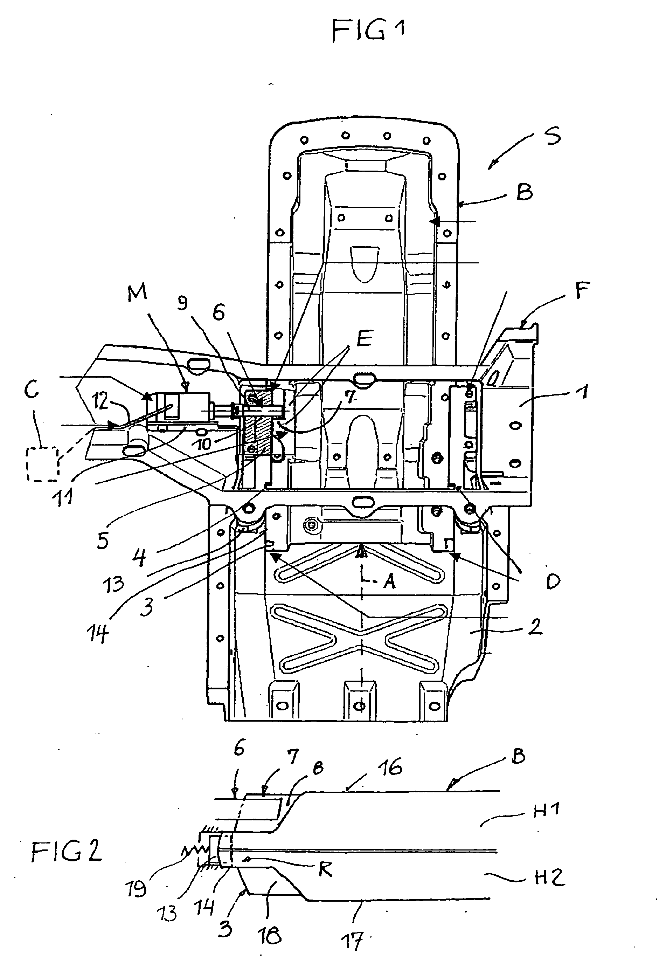

Ein Überrollbügel-System S gemäß Fig. 1 ist in ein Cabriolet (nicht gezeigt) unterhalb des Bereiches des Cabriolet-Verdecks z.B. hinter Sitzlehnen in den Fahrzeugkörper eingegliedert, zweckmäßig als zumindest weitgehend vorfertigbare und vorprüfbare Baueinheit. Die Ansichtsrichtung in Fig. 1 stimmt mit der Längsrichtung des Cabriolets überein. Das Verdeck des Cabriolets lässt sich (nicht gezeigt) so weit öffnen, dass das Überrollbügel-System S vollständig freiliegt. Bei geschlossenem Verdeck ist das Überrollbügel-System S vom Verdeck übergriffen.

Das Überrollbügel-System S (nur für eine Fahrzeugseite gezeigt) weist einen Überrollbügel B auf, der in einer in den Fahrzeugkörper integrierten oder an diesem montierten Stützführung F aus einer voll eingefahrenen, nicht gezeigten Passivlage über eine reduzierte Ausfahrhöhe (in Fig. 1 gezeigt) oder über eine maximale Ausfahrhöhe (nicht gezeigt) nach oben ausfahrbar ist. Zum Ausfahren des Überrollbügels B dient ein schematisch angedeuteter Ausfahrantrieb A. Das Systems S enthält eine erste Anschlaganordnung D zum Definieren der maximalen Ausfahrhöhe und eine zweite Anschlaganordnung E zum Definieren der gezeigten, reduzierten Ausfahrhöhe.

Die Stützführung F ist als sogenannte Kassette aus Blech- oder FaserverbundKunststoff-Formteilen 1 ausgebildet und mit einem nach unten verlängerten Kassetten- oder Fahrzeugkörperwand-Teil 2 verbunden, der gegenüber dem Fahrzeugkörper-Boden abgestützt sein kann.

Der Überrollbügel B ist zweckmäßigerweise ein Faserverbund-Pressformteil aus Pregpregs mit in eine Kunststoffmatrix eingebetteten Glasfasem, vorzugsweise in Schalenbauweise, d.h. (Fig. 2) aus zwei miteinander verbundenen Schalen H1, H2, wobei der Überrollbügel B mit einem flanschartigen Randbereich R und relativ geradem Seitenrandverlauf ausgebildet ist. Der Überrollbügel B ist in der Stützführung F linear geführt und quer zur Führungsrichtung abgestützt.

Die erste Anschlaganordnung D besteht aus (zumindest an einer Seite des Überrollbügels) einem stationären Anschlag 4 der Stützführung F und einem am Überrollbügel B vorgesehenen Gegenanschlag 3, der (Fig. 2) beispielsweise als eingeformte Schulter 18 aus dem Material des Überrollbügels B im Randbereich R ausgebildet ist. Der stationäre Anschlag 4 ist in Ausschieberichtung des Überrollbügels B auf den Gegenanschlag 3, d.h. die Schulter ausgerichtet, derart, dass nach Erreichen der maximalen Ausfahrhöhe der Gegenanschlag 3 des Überrollbügels B am stationären Anschlag 4 abgefangen wird.

In der Stützführung F ist wenigstens ein federbelastetes Sperrglied 13, z.B. eine Sperrklinke, gelagert, die in permanentem Eingriff mit einer Widerlagerreihe 14 entlang des Randbereiches R steht und eine Rückbewegung des ausgefahrenen Überrollbügels aus der maximalen Ausfahrhöhe sperrt.

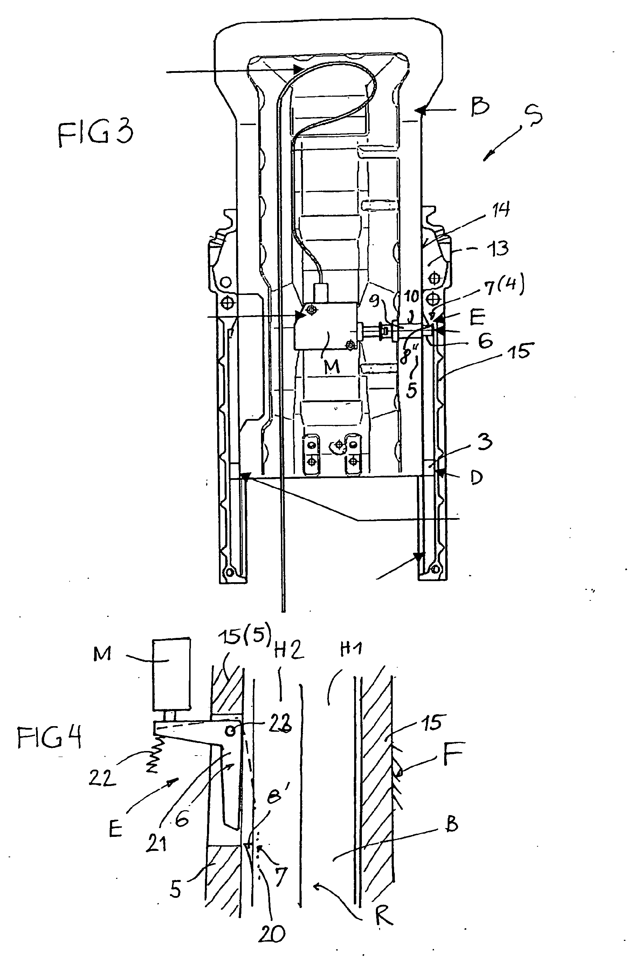

Die zweite Anschlaganordnung E besteht aus einem Fanganschlag 6, der in der Stützführung F stationär abgestützt ist, und einem Gegenfanganschlag 7 im Randbereich R des Überrollbügels B. Der Gegenfanganschlag 7 ist beispielsweise (Fig. 4) eine eingeformte Schulter 8. Der Fanganschlag 6 in Fig. 1 ist ein aus einer nicht gezeigten Bereitschaftsposition (in Fig. 1 weiter links als gezeigt) linear und quer zur Bügelausfahrrichtung in die gezeigte Eingriffsposition verstellbarer Anschlagbolzen 9. In der Eingriffsposition steht der Anschlagbolzen 9 im Bewegungsweg des Gegenfanganschlags 7, der am Fanganschlag 6 abgefangen wird, wenn die reduzierte Ausfahrhöhe erreicht ist.

Der Anschlagbolzen 9 ist in einem Stützlager 5 (einem Montierblock oder einem Führungsprofil der Stützführung F) in einer Führung 10 verschiebbar und somit in Ausfahrrichtung abgestützt. Der Anschlagbolzen 9 steht mit einem Stellaktuator M in Wirkverbindung, der auf einer Konsole 10 montiert und an der Stützführung F oder an dem Stützlager 5 gehaltert ist. Zweckmäßig bildet der Stellaktuator M mit dem Stützlager 5 und dem Anschlagbolzen 9 eine vorfertigbare Baueinheit. Über ein Anschlusskabel 12 steht der Stellaktuator M mit einer Steuerung C in Verbindung, vorzugsweise auch mit einem Sensor, der die Verdeckkondition des Cabriolets meldet. D.h., dass der Stellaktuator M in einer Unfallsituation nur dann ausgelöst wird, um den Fanganschlag 6 in die Eingriffsposition zu bringen, wenn über die Steuerung C eine geschlossene Kondition des Verdecks gemeldet wird.

Bei maximaler Ausfahrhöhe greift das obere Ende des Überrollbügels B weiter nach oben, als es der durch das geschlossene Verdeck definierte Cabriolet-Innenraum zulassen würde. Bei der reduzierten Ausfahrhöhe bleibt hingegen das obere Ende des Überrollbügels B innerhalb des durch das geschlossene Verdeck definierten Innenraums.

Der Überrollbügel B wird zweckmäßigerweise mit seinen beiden Randbereichen R in der Stützführung F geführt und abgestützt. Es ist möglich, an beiden Seiten des Überrollbügels B jeweils einen Gegenfanganschlag 7 und einen wahlweise verstellbaren Fanganschlag 6 vorzusehen. Auch die Anschläge und Gegenanschläge 3, 4 der ersten Anschlaganordnung D können beidseitig vorgesehen sein.

Die in Fig. 2 angedeutete Widerlagerreihe 14 ist beispielsweise ein Sägezahnprofil, in das als Sperrglied 13 eine durch eine Feder 19 belastete Sperrklinke eingreift, derart, dass die Sperrklinke beim Ausfahren des Flachseiten 16, 17 und beiderseitige Randbereiche R aufweisenden Überrollbügels B über die Sägezähne springt und dann sowohl bei maximaler Ausfahrhöhe als auch reduzierter Ausfahrhöhe einen vollen Eingriff findet, um ein Zurückdrücken des Überrollbügels B unter Belastung zu verhindern und die Belastung in den Fahrzeugkörper bzw. die Stützführung einzuleiten.

Bei der Ausführungsform in Fig. 3 ist der Überrollbügel B zweckmäßigerweise ebenfalls ein Faserverbundkunststoff-Pressformteil, obwohl bei beiden Ausführungsformen auch metallische Überrollbügel verwendet werden könnten.

In Fig. 3 ist die Stützführung F des Überrollbügels B nicht gezeigt, sondern nur in der Stützführung festlegbare Führungsprofile 15 aus Kunststoff oder Leichtmetall, die die Randbereiche des Überrollbügels umgreifen und führen und auch zum teilweisen Ausbilden der ersten und zweiten Anschlaganordnungen herangezogen sind.

In Fig. 3 wird beispielsweise an jeder Seite ein Sperrglied 13 in Ausrichtung auf die Widerlagerreihe 14 des Überrollbügels B in den oberen Endbereichen der Führungsprofile 15 vorgesehen, um ein Zurückdrücken des ausgefahrenen Überrollbügels B sowohl bei reduzierter als auch bei maximaler Ausfahrhöhe zu verhindem.

Bei dieser Ausführungsform bildet zweckmäßig der Stellaktuator M mit dem linear und quer zur Ausfahrrichtung ausfahrbaren Anschlagbolzen 9 eine vorfertigbare Baueinheit, die hier direkt an oder in einer Flachseite des Überrollbügels B montiert ist, wobei der Anschlagbolzen 9 den Gegenfanganschlag 6 der zweiten Anschlaganordnung E bildet, der mit dem Fanganschlag 7, der als Schulter 8" im Führungsprofil 15 geformt ist, zusammenarbeitet, um die reduzierte Ausfahrhöhe zu definieren. Der Anschlagbolzen 9 ist in einem hier in den Überrollbügel B integrierten oder daran montierten Stützlager 5 in der Führungsbohrung 10 geführt und abgestützt und wird vom Stellaktuator M bei dessen Betätigung in die gezeigte Eingriffsposition gebracht, in der er am Fanganschlag 7 bzw. der Schulter 8" abgefangen wird.

Der stationäre Anschlag 4 der ersten Anschlaganordnung D wird bei dieser Ausführungsform ebenfalls vom stationären Fanganschlag 7 der zweiten Anschlaganordnung E gebildet und ist auf den Gegenanschlag 3 am Überrollbügel B ausgerichtet. Der Gegenanschlag 3 ist beispielsweise eine vom Randbereich des Überrollbügels B nach außen vorstehende Schulter.

Die Ausführungsform der Fig. 4 unterscheidet sich von den vorhergehenden dadurch, dass der Fanganschlag 6 in der Stützführung F bzw. dem Führungsprofil 15 so gelagert ist (das Stützlager 5 wird vom Führungsprofil 15 gebildet), dass er mit dem hier am Überrollbügel R an beispielsweise einer Flachseite angeformten Gegenfanganschlag 7 zusammenwirkt. Der Gegenfanganschlag 7 ist beispielsweise eine sägezahnartige Schulter 8', an die sich, zweckmäßigerweise, ein Selbsthemmbereich 20 in der Flachseite des Überrollbügels B anschließt.

Der Fanganschlag 6 ist hier eine Anschlagklinke in Form eines zweiarmigen Winkelhebels 21, dessen einer Arm aus der gezeigten und durch eine Feder 22 definierten Bereitschaftsposition in die in gestrichelten Linien angedeutete Eingriffsposition verschwenkbar ist, und dann mit dem Gegenfanganschlag 7 bzw. dem Gegenfanganschlag 7 und dem Selbsthemmbereich 20 zusammenwirkt. Die Verstellung in die Eingriffsposition wird durch den Stellaktuator M vorgenommen, der hier parallel zur Ausfahrrichtung des Überrollbügels B angeordnet ist und auf den anderen Arm des Winkelhebels einwirkt, und zwar entgegengesetzt zur Kraft der Feder 22. Der Winkelhebel ist an einem Lagerbolzen 23 in einem Fenster des Führungsprofils 15 gelagert.

Im normalen Fahrbetrieb des Cabriolets ist der Überrollbügel B vollständig eingefahren und verriegelt, derart, dass sein oberes Ende beispielsweise in etwa mit den Kopfstützen davor angeordneter Sitzlehnen abschließt oder sogar darunter liegt. Ist das Verdeck des Cabriolets geschlossen, dann ist das System S so teilaktiviert, dass bei eine Unfallsituation repräsentierenden Auslösekriterien in jedem Fall der Stellaktuator M betätigt wird. Gegebenenfalls wird sogar eine Steuerroutine angewandt, bei der bei geschlossenem Verdeck der Stellaktuator M permanent betätigt ist und den Anschlagbolzen 9 oder die Sperrklinke vorsichtshalber in der Eingriffsposition hält. Verlangen die auftretenden Unfallkriterien das Ausfahren des Überrollbügels B, dann wird der Ausfahrantrieb A aktiviert, und auch der Stellaktuator M, sofern er nicht schon vorher aktiviert worden war. Der Überrollbügel B wird schlagartig über die reduzierte Ausfahrhöhe ausgefahren und in dieser durch die Zusammenwirkung zwischen dem Sperrglied 13 und der Widerlagerreihe 14 gegen Zurückdrücken verriegelt. Das geschlossene Verdeck wird nicht beschädigt oder durchstoßen. Resultiert die Unfallsituation in keinem Überschlag, so kann zu einem späteren Zeitpunkt der Überrollbügel B in üblicher Weise wieder in die eingezogene Ausgangslage zurückgeschoben werden.

Tritt ein Überschlag auf, dann wird die Belastung des Überschlags zunächst auf das Verdeck und dann auf den Überrollbügel B ausgeübt.

Ist das Verdeck geöffnet, dann wird von der Steuerung C eine Steuerroutine berücksichtigt, bei der der Stellaktuator M überhaupt nicht aktiviert wird bzw., falls er zuvor schon aktiviert war, der Anschlagbolzen 9 oder die Sperrklinke 21 in die Bereitschaftsstellung verlagert wird. Werden Unfallkriterien registriert, die den Ausfahrantrieb A aktivieren, dann fährt der Überrollbügel B über die maximale Ausfahrhöhe aus, bis die erste Anschlaganordnung D wirksam ist und das Sperrglied 13 der Widerlagerreihe 14 den Überrollbügel B verriegelt. Kommt es zu keinem Überschlag, dann kann zu einem späteren Zeitpunkt der Überrollbügel B wieder in die Ausgangslage zurückgedrückt werden. Kommt es zu einem Überschlag, dann werden die Überschlaglasten vom Überrollbügel B aufgenommen und über die Stützführung F in den Fahrzeugkörper eingeleitet.

Der Stellaktuator M enthält beispielsweise einen Elektromotor wie einen Schaltmagneten, der entweder unidirektional gegen Federkraft oder bidirektional arbeitet, um den Anschlagbolzen 9 oder die Sperrklinke 21 in die und/oder aus der Eingriffsposition zu bringen.

## Patentansprüche

1. Überrollbügel-System (S) für ein Cabriolet, mit wenigstens einem ausfahrbaren Überrollbügel (B), einer Abstützführung (F) und einem Ausfahrantrieb (A) für den Überrollbügel (B), einer ersten, eine maximale Ausfahrhöhe des Überrollbügels relativ zur Abstützführung (F) definierenden Anschlaganordnung (D) aus wenigstens einem stationären Fanganschlag (4,6) und einem in Ausfahrrichtung darauf ausgerichteten Gegenanschlag (3,7) am Überrollbügel (B), **dadurch gekennzeichnet, daß** wenigstens einer zweiten, innerhalb des maximalen Ausfahrhubes vorgesehenen, wahlweise eine reduzierte Ausfahrhöhe definierenden Anschlagordnung (E) aus wenigstens einem stationär abgestützten Fanganschlag (4,6) und einem in Ausfahrrichtung darauf ausgerichteten Gegenfanganschlag (3,7) am Überrollbügel (B) vorgesehen ist, wobei der Fanganschlag (4,6) oder/und der Gegenfanganschlag (3,7) zwischen einer passiven Bereitschaftsposition und einer Eingriffsposition verstellbar ist.

2. System nach Anspruch 1, **dadurch gekennzeichnet, dass** der Fanganschlag (4,6) oder/und der Gegenfanganschlag (3,7) bei geschlossenem Verdeck des Cabriolets selbsttätig in die Eingriffsposition verstellbar ist.

3. System nach Anspruch 2, **dadurch gekennzeichnet, dass** dem Fanganschlag (4,6) oder/und dem Gegenfanganschlag (3,7) ein Stellaktuator (M) für eine zumindest im Wesentlichen quer zur Ausfahrrichtung orientierte Stellbewegung zugeordnet ist.

4. System nach Anspruch 3, **dadurch gekennzeichnet, dass** der Gegenfanganschlag (7) als eine Schulter (8, 8') direkt am Überrollbügel (B) und der Fanganschlag (6) mit dem Stellaktuator (M) an der Abstützführung (F) angeordnet sind.

5. System nach Anspruch 3, **dadurch gekennzeichnet, dass** der verstellbare Gegenfanganschlag mit dem Stellaktuator (M) direkt am Überrollbügel (B), vorzugsweise an einer Flachseite (16, 17) des Überrollbügels, und der Fanganschlag als stationäre Schulter (8") an der Abstützführung (F) bzw. einem in dieser montierten Führungsteil (15) angeordnet sind.

6. System nach Anspruch 3, **dadurch gekennzeichnet, dass** der mit dem Stellaktuator (M) in Wirkverbindung stehende Fanganschlag (6) oder/und der Gegenfanganschlag (7) ein in einem Stützlager (5) quer zur Ausfahrrichtung linear verschiebbarer Anschlagbolzen (9) oder eine verschwenkbare Anschlagklinke (21) ist.

7. System nach Anspruch 4, **dadurch gekennzeichnet, dass** der Gegenfanganschlag (7) die an der Außenseite des Randbereichs (R) des Überrollbügels (B) angeformte Schulter (8') mit einem anschließenden Selbsthemmbereich (20), und, vorzugsweise, aus dem Material des Überrollbügels (B) geformt ist.

8. System nach Anspruch 6, **dadurch gekennzeichnet, dass** der als Anschlagbolzen (9) ausgebildete, in der Stützführung (F) montierbare Fanganschlag (6) mit dem als Montierblock ausgebildeten Stützlager (5) für den Anschlagbolzen (9) oder die Anschlagklinke und dem, vorzugsweise am Montierblock gehalterten, Stellaktuator (M) eine Baueinheit bildet.

9. System nach Anspruch 8, **dadurch gekennzeichnet, dass** das als Montierblock ausgebildete Stützlager (5) gleichzeitig den Anschlag (3) der ersten Anschlaganordnung (D) bildet.

10. System nach Anspruch 5, **dadurch gekennzeichnet, dass** der stationäre Fanganschlag der zweiten Anschlaganordnung (E) gleichzeitig den stationären Anschlag (4) der ersten Anschlaganordnung (D) bildet.

11. System nach Anspruch 5, **dadurch gekennzeichnet, dass** der den verstellbaren Anschlagbolzen (9) oder die Anschlagklinke aufweisende, am Überrollbügel (B) montierbare Gegenfanganschlag mit dem Stellaktuator (M) eine Baueinheit bildet, und dass das Stützlager (5, 10) am Überrollbügel (B) angeordnet, vorzugsweise in diesen integriert ist.

12. System nach Anspruch 6, **dadurch gekennzeichnet, dass** der mit dem Stützlager (5) an der Stützführung (F) montierbare, als Sperrklinke (21) ausgebildete Fanganschlag (6) einen Winkelhebel aufweist, dessen einer Arm in den Bewegungsweg der Schulter (8') verstellbar und dessen anderer Arm mit dem Stellaktuator (M) gekoppelt ist, wobei, vorzugsweise, der Winkelhebel durch eine Feder (22) in Richtung zur Bereitschaftsposition beaufschlagt und der Stellaktuator (M) parallel zur Ausfahrrichtung angeordnet ist.

13. System nach Anspruch 3, **dadurch gekennzeichnet, dass** der Stellaktuator (M) einen Elektromotor wie einen Magneten enthält.

14. System nach wenigstens einem der vorhergehenden Ansprüche, **dadurch gekennzeichnet, dass** der Stellaktuator (M) mit einer Auslöse-Steuerung und einem Sensor (C) für die Verdeckkondition des Cabriolets in elektrischer Wirkverbindung steht.

15. System nach wenigstens einem der vorhergehenden Ansprüche, **dadurch gekennzeichnet, dass** am Überrollbügel (B) und/oder der Stützführung (F) bzw. einem Führungsprofil (15) der Stützführung (F) entlang des Ausfahrhubes des Überrollbügels (B) wenigstens eine Wideriagerreihe (14) und wenigstens ein mit jedem Widerlager der Widerlagerreihe (14) selbsttätig in einen eine Rückbewegung des ausgefahrenen Überrollbügels (B) entgegengesetzt zur Ausfahrrichtung verhindernden Eingriff bringbares Sperrglied (13) vorgesehen sind, vorzugsweise eine Zahnreihe am Überrollbügel (B) und eine Rastklinke an der Stützführung bzw. dem Führungsprofil, und dass in Ausfahrrichtung die Relativpositionen der einzelnen Widerlager und des Sperrgliedes derart auf die maximale und die reduzierte Ausfahrhöhe abgestimmt sind, dass kurz vor oder bei Erreichen jeweils der maximalen oder der reduzierten Ausfahrhöhe wenigstens ein Widerlager in vollem Eingriff mit dem Sperrglied ist.

16. System nach wenigstens einem der vorhergehenden Ansprüche, **dadurch gekennzeichnet, dass** zumindest der Überrollbügel (B) ein Pressformteil aus Faserverbundkunststoff-Prepregs mit in eine Kunststoffmatrix eingebetteten Glasfasem ist, vorzugsweise bestehend aus zwei miteinander verbundenen Schalen (H1, H2).

## Claims

1. Roll-bar system (S) for a convertible, said system having at least one extendable roll bar (B), a supporting guide (F) and an extending drive (A) for said roll bar (B), a first stop arrangement (D) which defines a maximum height of extension of the roll bar relative to the supporting guide (F) and consists of at least one stationary catching stop (4, 6) and a counter-stop (3, 7) on the roll bar (B) which is aligned therewith in the direction of extension, **characterised in that** at least one second stop arrangement (E), which is provided inside the maximum stroke of extension, selectively defines a reduced height of extension and consists of at least one catching stop (4, 6) which is supported in a stationary manner and a catching counter-stop (3, 7) which is aligned therewith in the direction of extension, is provided on the roll bar (B), said catching stop (4, 6) or/and said catching counter-stop (3, 7) being shiftable between a passive stand-by position and a position of engagement.

2. System according to Claim 1, **characterised in that** the catching stop (4, 6) or/and the catching counter-stop (3, 7) is/are shiftable into the position of engagement automatically when the hood of the convertible is closed.

3. System according to Claim 2, **characterised in that** a positioning actuator (M) for a positioning movement which is oriented, at least substantially, transversely to the direction of extension, is associated with the catching stop (4, 6) or/and the catching counter-stop (3, 7).

4. System according to Claim 3, **characterised in that** the catching counter-stop (7) is arranged, in the form of a shoulder (8, 8'), directly on the roll bar (B), and the catching stop (6) is arranged, with the positioning actuator (M), on the supporting guide (F).

5. System according to Claim 3, **characterised in that** the shiftable catching counter-stop is arranged, with the positioning actuator (M), directly on the roll bar (B) and preferably on the flat side (16, 17) of the latter, and the catching stop is arranged, in the form of a stationary shoulder (8"), on the supporting guide (F) or on a guide part (15) mounted in said supporting guide.

6. System according to Claim 3, **characterised in that** the catching stop (6), which is in operative connection with the positioning actuator (M), or/and the catching counter-stop (7) is a stop pin (9) which is displaceable in a supporting bearing (5) in a linear manner transversely to the direction of extension, or a tiltable stop pawl (21).

7. System according to Claim 4, **characterised in that** the catching counter-stop (7) is the shoulder (8') which is moulded onto the outer side of the edge region (R) of the roll bar (B) and has an adjoining self-locking region (20), and is preferably moulded from the material of said roll bar (B).

8. System according to Claim 6, **characterised in that** the catching stop (6), which is constructed as a stop pin (9) and can be mounted in the supporting guide (F), forms a structural unit with the supporting bearing (5), which is constructed as a mounting block, for the stop pin (9), or the stop pawl and the positioning actuator (M), which is preferably secured to said mounting block.

9. System according to Claim 8, **characterised in that** the supporting bearing (5), which is constructed as a mounting block, simultaneously forms the stop (3) belonging to the first stop arrangement (D).

10. System according to Claim 5, **characterised in that** the stationary catching stop belonging to the second stop arrangement (E) simultaneously forms the stationary stop (4) belonging to the first stop arrangement (D).

11. System according to Claim 5, **characterised in that** the catching counter-stop, which has the shiftable stop pin (9) or the stop pawl and can be mounted on the roll bar (B), forms a structural unit with the positioning actuator (M), and that the supporting bearing (5, 10) is arranged on the roll bar (B), and is preferably integrated into the latter.

12. System according to Claim 6, **characterised in that** the catching stop (6), which can be mounted, with the supporting bearing (5), on the supporting guide (F) and is constructed as a blocking pawl (21), has an angle lever, one of whose arms can be shifted into the path of movement of the shoulder (8') and whose other arm is coupled to the positioning actuator (M), it being preferable if the angle lever is loaded by a spring (22) in the direction of the stand-by position and the positioning actuator (M) is arranged parallel to the direction of extension.

13. System according to Claim 3, **characterised in that** the positioning actuator (M) contains an electric motor such as a magnet.

14. System according to at least one of the preceding claims, **characterised in that** the positioning actuator (M) is in electrical operative connection with a triggering control system and a sensor (C) for the condition of the convertible's hood.

15. System according to at least one of the preceding claims, **characterised in that** there are provided, on the roll bar (B) and/or the supporting guide (F), or a guide profile (15) belonging to said supporting guide (F), along the stroke of extension of said roll bar (B), at least one row (14) of abutments and at least one blocking member (13) which can be automatically brought into an engagement, which prevents a return movement of the extended roll bar (B) in a manner opposed to the direction of extension, with each abutment belonging to the row (14) of abutments, preferably a row of teeth on the roll bar (B) and a latching pawl on the supporting guide or the guide profile, and that the relative positions of the individual abutments and of the blocking member in the direction of extension are coordinated with the maximum and reduced heights of extension in such a way that, shortly before or when the maximum or reduced height of extension, respectively, is reached, at least one abutment is in full engagement with the blocking member.

16. System according to at least one of the preceding claims, **characterised in that** at least the roll bar (B) is a compression-moulded part made of fibre-composite plastic prepregs with glass fibres embedded in a plastic matrix, said compression-moulded part preferably consisting of two shells (H1, H2) which are connected to one another.

## Revendications

1. Système d'arceau de sécurité (S) pour un cabriolet, comportant au moins un arceau de sécurité (B) en forme de U extractible, un guidage de support (F) et un mécanisme d'extraction (A) pour l'arceau de sécurité (B), un premier dispositif de butée (D) définissant une hauteur d'extraction maximale de l'arceau de sécurité (B) par rapport au guidage de support (F) formé par au moins une butée d'arrêt (4, 6) stationnaire et une butée d'arrêt complémentaire (3, 7) orientée vers celle-ci dans la direction d'extraction sur l'arceau de sécurité (B), **caractérisé en ce qu'**il est prévu au moins un deuxième dispositif de butée (E), qui est prévu à l'intérieur de la course d'extraction maximale et définissant au choix une hauteur d'extraction réduite, et qui est formé par au moins une butée d'arrêt (4, 6) stationnaire en appui fixe et une butée d'arrêt complémentaire (3, 7) orientée vers celle-ci dans la direction d'extraction sur l'arceau de sécurité (B), la butée d'arrêt (4, 6) et/ou la butée d'arrêt complémentaire (3, 7) pouvant être réglées entre une position d'attente passive et une position d'engagement.

2. Système selon la revendication 1, **caractérisé en ce que** la butée d'arrêt (4, 6) et/ou la butée d'arrêt complémentaire (3, 7) peuvent se déplacer automatiquement dans la position d'engagement lorsque le pavillon du cabriolet est fermé.

3. Système selon la revendication 2, **caractérisé en ce qu'**une servocommande (M), pour un mouvement de réglage orienté au moins sensiblement perpendiculairement à la direction d'extraction, est associée à la butée d'arrêt (4, 6) et/ou à la butée d'arrêt complémentaire (3, 7).

4. Système selon la revendication 3, **caractérisé en ce que** la butée d'arrêt complémentaire (7) est agencée sous forme d'épaulement (8, 8') directement sur l'arceau de sécurité (B) et la butée d'arrêt (6) est agencée avec la servocommande (M) sur le guidage de support (F).

5. Système selon la revendication 3, **caractérisé en ce que** la butée d'arrêt complémentaire est agencée avec la servocommande (M) directement sur l'arceau de sécurité (B), de préférence sur un côté plat (16, 17) de l'arceau de sécurité (B), et la butée d'arrêt est agencée sous forme d'épaulement fixe (8") sur le guidage de support (F), plus précisément un élément de guidage (15) monté dans celui-ci.

6. Système selon la revendication 3, **caractérisé en ce que** la butée d'arrêt (6), en liaison active avec la servocommande (M), et/ou la butée d'arrêt complémentaire (7) est un boulon de butée (9) apte à être déplacé dans le sens linéaire dans un palier d'appui (5) perpendiculairement à la direction d'extraction ou une lame de butée (21) pivotante.

7. Système selon la revendication 4, **caractérisé en ce que**, sur la butée d'arrêt complémentaire (7), l'épaulement (8'), formé sur la face extérieure de la zone de bordure (R) de l'arceau de sécurité (B), est réalisé avec une zone autobloquante (20) adjacente et, de préférence, dans le même matériau que l'arceau de sécurité (B).

8. Système selon la revendication 6, **caractérisé en ce que** la butée d'arrêt (6), qui est conçue sous forme de boulon de butée (9) et peut être montée dans le guidage de support (F), forme une unité conjointement avec le palier d'appui (5), conçu sous forme de bloc de montage, pour le boulon de butée (9) ou la lame de butée, et avec la servocommande (M), maintenue de préférence contre le bloc de montage.

9. Système selon la revendication 8, **caractérisé en ce que** le palier d'appui (5), conçu sous forme de bloc de montage, forme en même temps la butée (3) du premier dispositif de butée (D).

10. Système selon la revendication 5, **caractérisé en ce que** la butée d'arrêt stationnaire du deuxième dispositif de butée (E) forme en même temps la butée (4) stationnaire du premier dispositif de butée (D).

11. Système selon la revendication 5, **caractérisé en ce que** la butée d'arrêt complémentaire, qui comporte le boulon de butée (9) réglable ou la lame de butée et qui peut être montée sur l'arceau de sécurité (B), forme conjointement avec la servocommande (M) une unité, et **en ce que** le palier d'appui (5, 10) est agencé sur l'arceau de sécurité (B), de préférence est intégré dans celui-ci.

12. Système selon la revendication 6, **caractérisé en ce que** la butée d'arrêt (6), qui peut être montée avec le palier d'appui (5) sur le guidage de support (F) et est conçue sous forme de lame d'arrêt (21), comporte un levier coudé, dont un bras peut être amené dans la trajectoire du mouvement de l'épaulement (8') et dont l'autre bras est couplé à la servocommande (M), le levier coudé étant, de préférence, sollicité par un ressort (22) vers la position d'attente et la servocommande (M) étant agencée parallèlement à la direction d'extraction.

13. Système selon la revendication 3, **caractérisé en ce que** la servocommande (M) comporte un moteur électrique, tel qu'un électroaimant.

14. Système selon l'une quelconque des revendications précédentes, **caractérisé en ce que** la servocommande (M) est en liaison électrique active avec une commande de déclenchement et un capteur (C) pour la condition de fermeture du pavillon du cabriolet.

15. Système selon l'une quelconque des revendications précédentes, **caractérisé en ce que**, sur l'arceau de sécurité (B) et/ou le guidage de support (F), plus précisément le profilé de guidage (15) du guidage de support (F), il est prévu le long de la course d'extraction de l'arceau de sécurité (B) au moins une rangée de contre-butées (14) et au moins un organe de verrouillage (13) qui peut être amené automatiquement en prise avec chaque contre-butée de la rangée de contre-butées (14) pour empêcher un mouvement de retour de l'arceau de sécurité (B) extrait, opposé à la direction d'extraction, à savoir de préférence une rangée de dents sur l'arceau de sécurité (B) et une lame d'arrêt sur le guidage de support, plus précisément le profilé de guidage, et **en ce que**, dans la direction d'extraction, les positions relatives des différentes contre-butées et l'organe de verrouillage sont ajustées à la hauteur d'extraction maximale et réduite, de telle sorte qu'au moins une contre-butée est complètement en prise avec l'organe de verrouillage juste avant que la hauteur d'extraction maximale ou réduite soit atteinte ou lorsque celle-ci est atteinte.

16. Système selon l'une quelconque des revendications précédentes, **caractérisé en ce qu'**au moins l'arceau de sécurité (B) est une pièce moulée sous pression dans un préimprégné en matière plastique renforcée par fibres, avec des fibres de verre enrobées dans une matrice en matière plastique, formée de préférence par deux coques (H1, H2) assemblées l'une à l'autre.
